# EUROPEAN PATENT SPECIFICATION

(11) **EP 3 588 680 B1**
(45) Date of publication and mention of the grant of the patent: **04.08.2021**
(21) Application number: 19180520.9
(22) Date of filing: 17.06.2019
(51) Int. Cl.: H01R 4/2495, H01R 9/053, H01R 13/58, H01R 43/048, H01R 43/058

(54) **CONDUCTOR ASSEMBLY WITH A CRIMPED TUBULAR FERRULE AND METHOD AND TOOL FOR MANUFACTURING SAME**
LEITERANORDNUNG MIT GECRIMPTER ROHRHÜLSE SOWIE VERFAHREN UND WERKZEUG ZU DEREN HERSTELLUNG
ENSEMBLE CONDUCTEUR COMPORTANT UN EMBOUT TUBULAIRE SERTI ET OUTIL POUR SA FABRICATION

(30) Priority: 27.06.2018 US 201816019666
(43) Date of publication of application: 01.01.2020
(73) Proprietor: Aptiv Technologies Limited, 14004 St. Michael (BB)
(72) Inventor: WEILAND, Jesse, Hermitage, PA Pennsylvania 16148 (US); MCGARVEY, Shae T., Leola, PA Pennsylvania 17540 (US); LEWIS, Ryan D., Warren, OH Ohio 44484 (US); KOUNTZ, John, Youngstown, OH Ohio 44514 (US)
(74) Representative: Westphal, Mussgnug Patentanwälte & Partner mbB

(56) References cited:
- EP-A2- 1 930 988
- GB-A- 2 300 765
- NL-A- 9 101 669
- US-A- 2 226 849
- US-A- 5 685 072

## Description

The invention relates to a conductor assembly including a tubular ferrule, a method for manufacturing a coaxial connector assembly and a tool for manufacturing a coaxial connector assembly.

Publication NL 9 101 669 A discloses a connection for a coaxial cable, wherein at least one or more electrically conductive pins protrude between the outer sheath and the electric shield of the coaxial cable and between the electrically conductive core of the coaxial cable and the surrounding insulator in order to establish electrical contact with the coaxial cable. Publication US 2 226 849 A relates to means for connecting a plug conductor terminal to an electrical conductor and discloses a tool for making indentations into a body and comprising a plurality of radially arranged jaws members.

According to the invention a cable assembly is provided. The cable assembly includes an elongate conductor surrounded by an outer insulator and an outer ferrule surrounding a portion of the conductor. An outer surface of the outer ferrule is deformed to produce an indentation having an indentation surface that is angled relative to the outer surface. The indentation forms a barb that at least partially penetrates the outer insulator. The elongate conductor has a substantially circular cross section. The outer ferrule is seamless and has a generally cylindrical shape having a ferrule radius. The outer ferrule is deformed to define four depressions each having a convex bottom surface and four protrusions evenly spaced about a circumference of the outer ferrule. The convex bottom surfaces have a convex radius that is less than the ferrule radius. The convex bottom surfaces are formed by the outer surface and are deformed to produce four indentations.

In another embodiment, the indentation is located adjacent a distal edge of the outer ferrule.

In another embodiment, an angle of the indentation surface relative to the outer surface is in a range of 10 to 20 degrees.

In another embodiment, adjacent depressions of the four depressions are spaced approximately 90 degrees apart about a longitudinal axis of the outer ferrule. One of the four protrusions is located intermediate the adjacent depressions. Adjacent protrusions of the four protrusions are spaced approximately 90 degrees apart about the longitudinal axis of the outer ferrule. Adjacent indentations of the four indentations are spaced approximately 90 degrees apart about the longitudinal axis of the outer ferrule.

In another embodiment, the elongate conductor is a coaxial electrical cable comprising a central inner conductor, an inner insulator surrounding the inner conductor, an outer conductor surrounding the inner insulator, and the outer insulator surrounding the outer conductor.

In another embodiment, the cable assembly further includes an inner ferrule that is disposed intermediate the outer conductor and the inner insulator.

In another embodiment, a portion of the outer ferrule retains the ferrule radius after deformation.

In another embodiment, each of the four protrusions has a height that is less than a height threshold.

In another embodiment, the four indentations have the convex radius.

Also according to the invention, a method of manufacturing a coaxial cable assembly is presented. The method includes the steps of
a) providing a coaxial electrical cable comprising a central inner conductor, an inner insulator surrounding the inner conductor, an outer conductor surrounding the inner insulator, and an outer insulator surrounding the outer conductor;
b) providing a generally cylindrical seamless outer ferrule having a ferrule radius;
c) providing a crimping tool including four crimping dies each having a first die face defining a consistent depression radius that is less than the ferrule radius and a second die face that is angled relative to the first die face;
d) placing the outer ferrule over a portion of the outer insulator;
e) deforming the outer ferrule using the crimping tool to form four depressions and four protrusions in the outer ferrule that are evenly spaced about a circumference of the outer ferrule, wherein the four depressions each are characterized as having the depression radius; and
f) deforming the four depressions to form four indentations, each indentation having an indentation surface that is angled relative to an outer surface of each of the four depressions and wherein each indentation forms a barb that at least partially penetrates the outer insulator.

In another embodiment, the four indentations are located adjacent a distal edge of the outer ferrule.

In another embodiment, an angle of the indentation surface relative to the outer surface is in a range of 10 to 20 degrees.

In another embodiment, adjacent depressions of the four depressions are spaced approximately 90 degrees apart about a longitudinal axis of the outer ferrule, wherein one of the four protrusions is located intermediate the adjacent depressions. Adjacent protrusions of the four protrusions are spaced approximately 90 degrees apart about the longitudinal axis of the outer ferrule. Adjacent indentations of the four indentations are spaced approximately 90 degrees apart about the longitudinal axis of the outer ferrule.

In another embodiment, a portion of the outer ferrule retains the ferrule radius after deformation. Each of the four protrusions has a height that is less than a height threshold.

Also according to the invention, a tool for manufacturing a coaxial cable assembly configured to form four evenly spaced depressions having an depression radius and four evenly spaced protrusions about a circumference of a generally cylindrical seamless ferrule having a ferrule radius, each protrusion of the four protrusions having a protrusion height equal to or less than a height threshold, said tool further configured to form four indentations, each indentation having an indentation surface that is angled relative to an outer surface of each of the four depressions, is provided. The tool includes four crimping dies. Each crimping die of the four crimping dies defines a concave crimping surface having the depression radius and a concave indentation surface angled relative to the crimping surface. The indentation surface also has the depression radius. The tool further includes four limiting dies. Each limiting die is located intermediate two adjacent crimping dies of the four crimping dies and defines a limiting surface configured to limit a height of each protrusion to the height threshold.

In another embodiment, adjacent crimping dies are spaced approximately 90 degrees apart about a longitudinal axis and wherein adjacent limiting dies of the four limiting dies are spaced approximately 90 degrees apart about the longitudinal axis.

In another embodiment, each limiting surface is spaced a limiting distance from the longitudinal axis of the outer ferrule. The limiting distance is equal to the ferrule radius plus the height threshold.

In another embodiment, the four limiting dies are fixed such that each limiting surface remains at the limiting distance as the four crimping dies move relative to the longitudinal axis of the outer ferrule.

In another embodiment, the tool further includes four linkages between each crimping die and an adjoining limiting die. The four linkages are configured to move each limiting surface of each limiting die to the limiting distance as the four crimping dies move toward the longitudinal axis of the outer ferrule.

The present invention will now be described, by way of example with reference to the accompanying drawings, in which:
Fig. 1 is a perspective view of a conductor assembly including a crimped tubular ferrule according to the invention,
Fig. 2 is a cross section view of the conductor assembly of Fig. 1 according to the invention;
Fig. 3 is a perspective view of a conductor assembly including a crimped tubular ferrule according to the invention;
Fig. 4 is a front end view of a crimping tool having fixed limiting dies used to form the tubular ferrule of the conductor assembly of Figs. 1 or 3 according to the invention;
Fig. 5 is a close up front end view of the crimping dies and limiting dies of the crimping tool of Fig. 4 according to the invention;
Fig. 6 is a perspective side view of the crimping tool of Fig. 4 with one of the crimping dies removed to better show the limiting dies according to the invention;
Fig. 7 is a front end view of a crimping tool having moveable limiting dies used to form the tubular ferrule of the conductor assembly of Figs. 1 or 3 according to the invention;
Fig. 8a is a perspective and end view of a tubular ferrule of the conductor assembly of Figs. 1 and 3 prior to forming with the crimping tool of Fig. 4 or 7 according to the invention;
Fig. 8b is a perspective and end view of the tubular ferrule of the conductor assembly of Fig 8a after forming with the crimping tool of Fig. 4 or 7 according to the invention;
Fig 9 is a side view of a conductor assembly including an indentation that forms a barb penetrating the outer insulator according to the invention;
Fig 10a is a perspective view of a crimping tool configured to form the indentation of Fig. 9 according to the invention;
Fig 10b is a side view of the crimping tool of Fig. 11a according to the invention;
Fig. 11 is a side view of the tool of Fig. 10a in relation to the conductor assembly of Fig. 9 after forming the indentation according to the invention; and
Fig. 12 is a flow chart of a method of manufacturing the conductor assemblies of Figs. 1, 3, or 9 using the crimping tool of Figs. 4, 7, or 10a-b according to the invention.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Presented herein is a conductor assembly that includes a seamless tubular ferrule that is crimped to an elongate conductor. The tubular ferrule is deformed in a crimping process to attach the ferrule to the conductor. After crimping, the ferrule defines four depressions having a consistent radius and four protrusions evenly spaced about a circumference of the ferrule. A tool used to deform the ferrule which limits the height four protrusions is also presented herein.

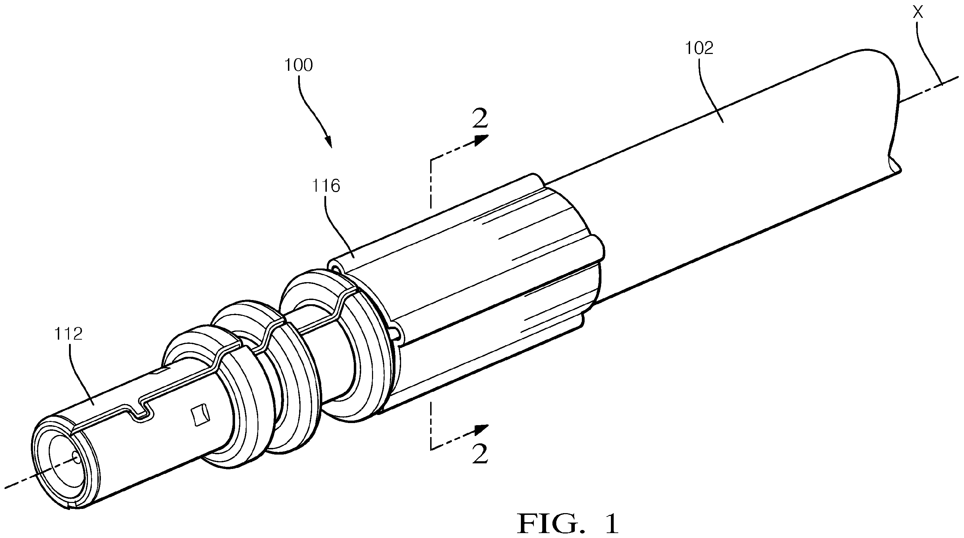

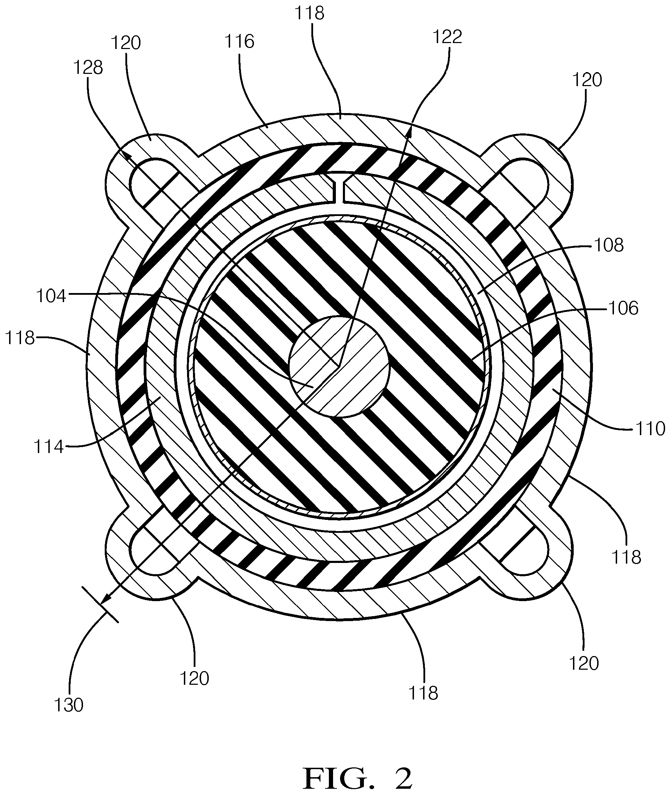

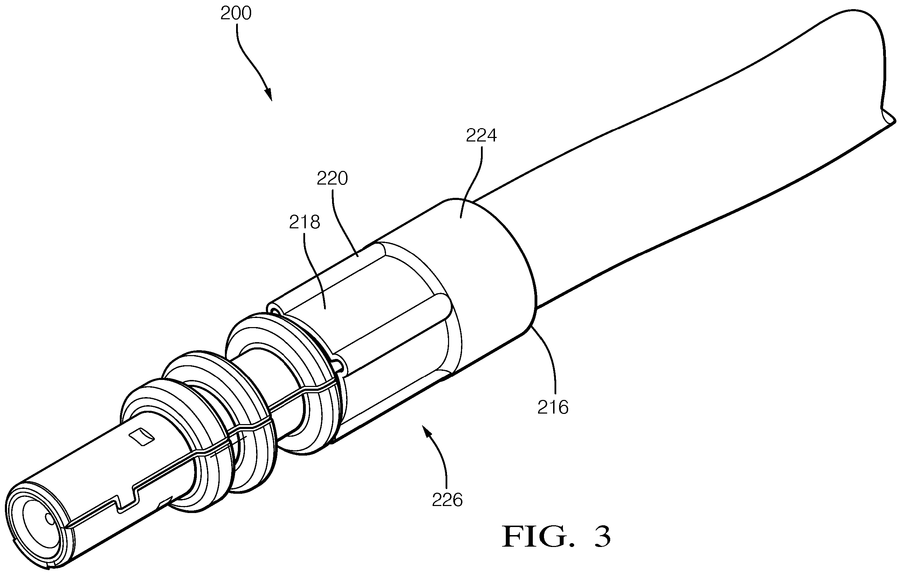

Figs. 1-3 illustrate a non-limiting example of a conductor assembly 100, hereinafter referred to as the assembly 100. As shown in Fig. 3, the assembly 100 includes an elongate conductor, in this particular example a coaxial electrical cable 102. The coaxial cable 102 has a central inner conductor 104, an inner insulator 106 surrounding the inner conductor 104, an outer conductor 108 surrounding the inner insulator 106, and an outer insulator 110 surrounding the inner insulator 106. As shown in Fig. 2, the coaxial cable 102 has a generally circular cross section.

The assembly 100 also includes a conductive inner terminal (not shown) connected to the inner conductor 104 and a conductive outer terminal 112 surrounding the inner terminal and connected to the outer conductor 108. The outer terminal 112 defines a tubular inner ferrule 114 that is disposed intermediate the inner insulator 106 and the outer insulator 110. According to the particular example illustrated in Fig. 2, the inner ferrule 114 is located intermediate the outer insulator 110 and the outer conductor 108. A terminal insulator is disposed between the inner terminal and the outer terminal 112.

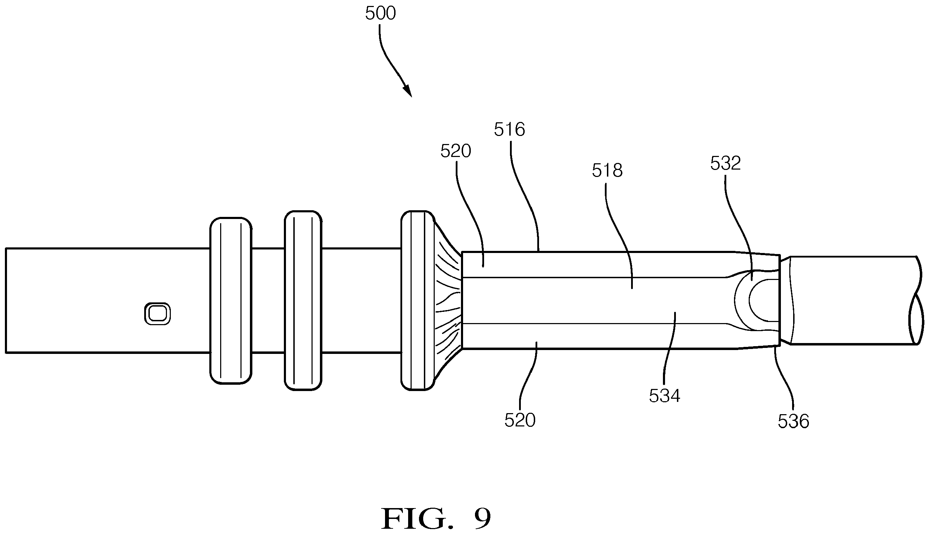

The assembly 100 further includes a generally cylindrical seamless outer ferrule 116 having a surrounding a portion of the outer insulator 110 overlying the inner ferrule 114. The outer ferrule 116 is deformed by a crimping tool 300 to define four depressions 118 extending along the outer ferrule 116 in a direction generally parallel to the longitudinal axis X of the outer ferrule 116. Each of the four depressions 118 have the same consistent depression radius 122. The deformation produces four protrusions 120 extending along the outer ferrule 116 in a direction generally parallel to the longitudinal axis of the outer ferrule 116. The four depressions 118 and the four protrusions 120 are evenly spaced about a circumference of the outer ferrule 116. Adjacent depressions 118 of the four depressions 118 are spaced approximately 90 degrees apart about the longitudinal axis of the outer ferrule 116. As used herein, approximately 90 degrees apart is within a range of 80 to 100 degrees apart. As best shown in Fig. 2, one of the four protrusions 120 is located intermediate the adjacent depressions 118. Adjacent protrusions 120 of the four protrusions 120 are also spaced approximately 90 degrees apart about the longitudinal axis of the outer ferrule 116. As shown in Figs. 9a and 9b, the depression radius 122 of the four depressions 118 is less than the original ferrule radius 124 of the outer ferrule 116 prior to deformation by the crimping tool 300.

The height 128 of each of the four protrusions 120 is controlled during the crimping process 700 so that each of the four protrusions 120 is equal to or less than a height threshold 130. Control of the protrusion height 128 is discussed in more detail in the description of the crimping tool 300 below.

As shown in Fig. 1, the four depressions 118 and the four protrusions 120 extend along the entire length of the outer ferrule 116. According to an alternative embodiment of the assembly 200 shown in Fig. 3, only a central portion 226 of the outer ferrule 216 is deformed to form the four depressions 218 and the four protrusions 220. The ends of the outer ferrule 216 retain the original ferrule radius 224.

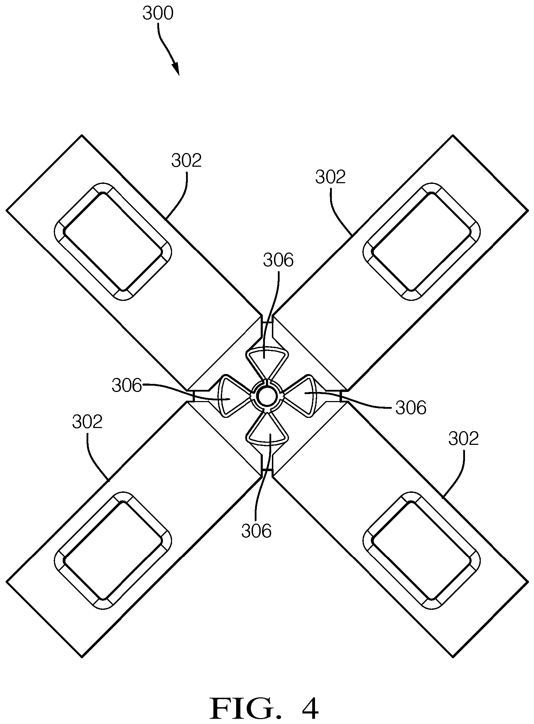

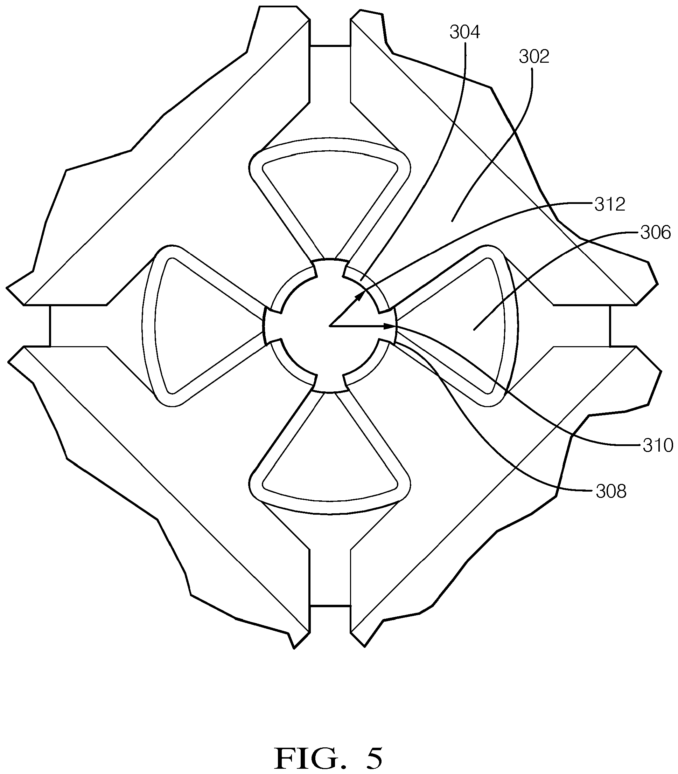

Figs 4-6 illustrate a non-limiting example of a crimping tool 300 used to crimp the outer ferrule 116, 216 of the coaxial cable assembles 100, 200 shown in Figs. 1 and 3. The crimping tool 300 is configured to form the four evenly spaced depressions 118, 218 and the four evenly spaced protrusions 120, 220 about the circumference of the outer ferrule 116. As shown in Fig. 4, the crimping tool 300 includes four crimping dies 302. Each crimping die 302 of the four crimping dies 302 defines a concave crimping surface 304 having an depression radius 312 that is substantially equal to the depression radius 122 of the formed outer ferrule 116. The crimping tool 300 also includes four limiting dies 306. As best shown in Fig. 5, each limiting die 306 defines a concave limiting surface 308 having a limiting radius 310 that is greater than the depression radius 312 of the crimping dies 302. The limiting dies 306 are configured to limit the height 128 of each protrusion to the height threshold 130 and are located intermediate two adjacent crimping dies 302 of the four crimping dies 302. Adjacent crimping dies 302 are spaced approximately 90 degrees apart about a longitudinal axis of the crimping tool 300. Adjacent limiting dies 306 of the four limiting dies 306 are also spaced approximately 90 degrees apart about the longitudinal axis of the crimping tool 300.

Each limiting surface 308 is spaced at a distance of the limiting radius 310 from the longitudinal axis of the ferrule. This limiting radius 310 is equal to the original ferrule radius 124 plus the height threshold 130 of the four protrusions 120 of the outer ferrule 116.

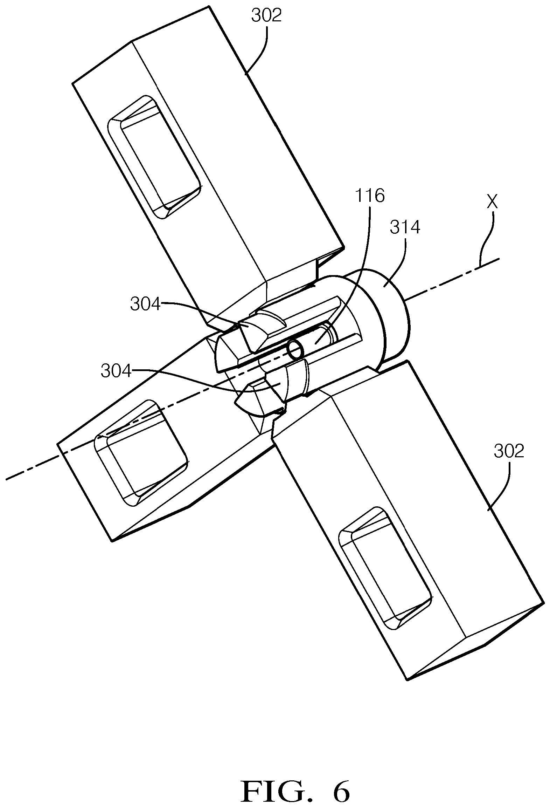

According to the embodiment of the crimping tool 300 shown in Fig. 6, the four limiting dies 306 are integrally formed in a single die assembly 314 and are fixed such that each limiting surface 308 remains at the distance of the limiting radius 310 as the four crimping dies 302 move relative to the longitudinal axis of the tool 300.

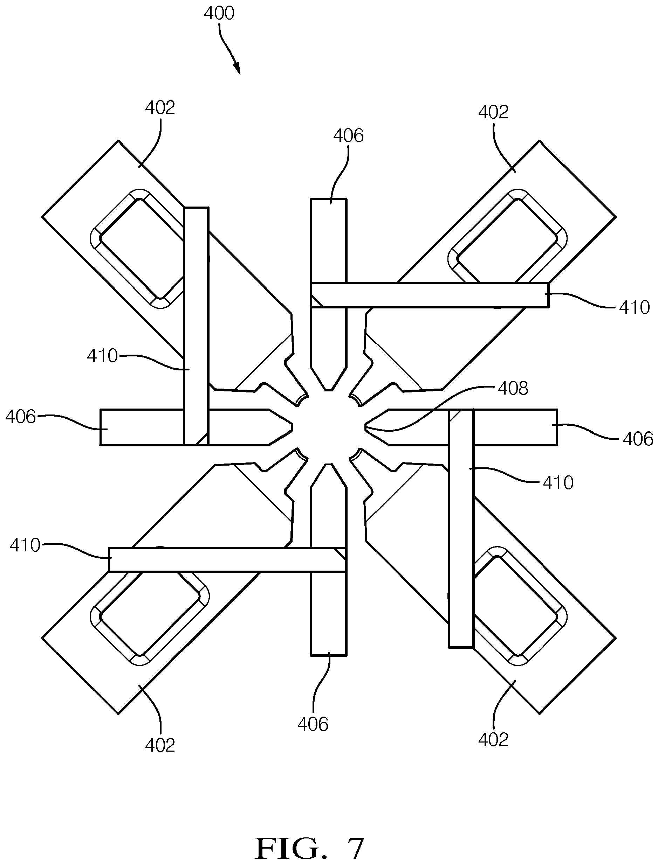

According to an alternative embodiment of the crimping tool 400 shown in Fig. 7, the crimping tool 400 further includes four linkages 410 between each crimping die 402 and an adjoining limiting die 406. The four linkages 410 are configured to move each limiting die 406 and hence each limiting surface 408 to the distance of the limiting radius 310 as the four crimping dies 402 move toward the longitudinal axis of the tool 400 as the crimping tool 400 deforms the outer ferrule 116 of the coaxial cable assembly 100.

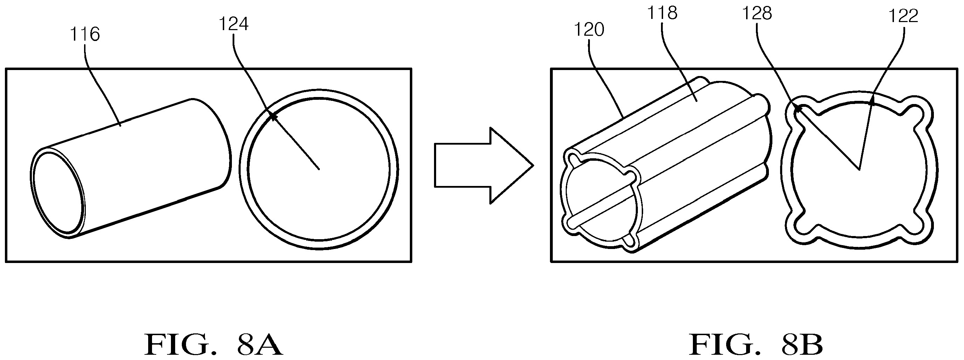

Fig.8a illustrates the shape of the outer ferrule 116 prior to forming. Fig. 8b illustrate the shape of the outer ferrule 116 after forming it with the crimping tool 300, 400.

Fig. 9 illustrates an alternative embodiment of the assembly 500 that includes four indentations 532 produced by deforming the convex bottom surfaces 534 of the four depressions 518. The indentations 532 are located adjacent a distal edge 536 of the outer ferrule 516. An angle of a surface of the indentation 532 relative to the convex bottom surfaces 534 is in a range of 10 to 20 degrees, preferably 15 degrees. Adjacent indentations 532 of the four indentations 532 are spaced approximately 90 degrees apart about the longitudinal axis X of the outer ferrule 516. The inventors have confirmed through testing that the addition of the indentations 532 improve the integrity of the assembly 500 by increasing the force required to separate the outer ferrule 516 from the assembly 500. Tables 1 and 2 present a comparison of test results regarding the the performance of assembly 100 and assembly 500 during USCAR 37 Shield Retention tests and USCAR 17 Sequence N - Mechanical Pull tests published by the United States Council for Automotive Research (USCAR).

**Table 1 USCAR 37 Shield Retention Test Results**

| | Assembly 100 | Assembly 500 |
|---|---|---|
| # of Samples | 80 | 6 |
| Max. Force Required to Separate Outer Ferrule | 151.9 N | 275.8 N |
| Min. Force | 97.8 N | 250.9 N |
| Avg. Force | 123.9 N | 257.4 N |
| Std. Deviation (σ) | 11.95 N | 9.13 N |
| Avg. - 3σ | 88.05 N | 230 N |
| Minimum Requirement | 150 N | |
| Result | Fail | Pass |
| Necessary Deviation from Requirement | 80 N | N/A |

**Table 2 USCAR 17 Sequence N - Mechanical Pull Test Results**

| | Assembly 100 | Assembly 500 |
|---|---|---|
| # of Samples | 12 | 12 |
| # Passing | 3 | 12 |
| % Passing | 25% | 100% |

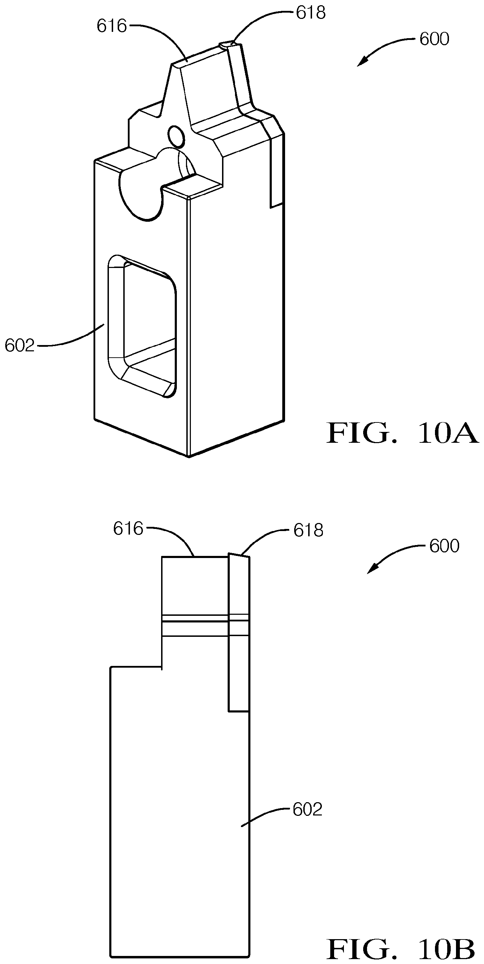

Figs. 10a and 10b illustrate another alternative embodiment of the crimping tool 600. Each of the four crimping dies 602 include a concave crimping surface 616 and a concave indentation surface 618 angled relative to the crimping surface 616. The concave crimping surface 616 and the concave indentation surface 618 have the same radius. An angle of the indentation surface 618 relative to the crimping surface 616 is in a range of 10 to 20 degrees, preferably 15 degrees.

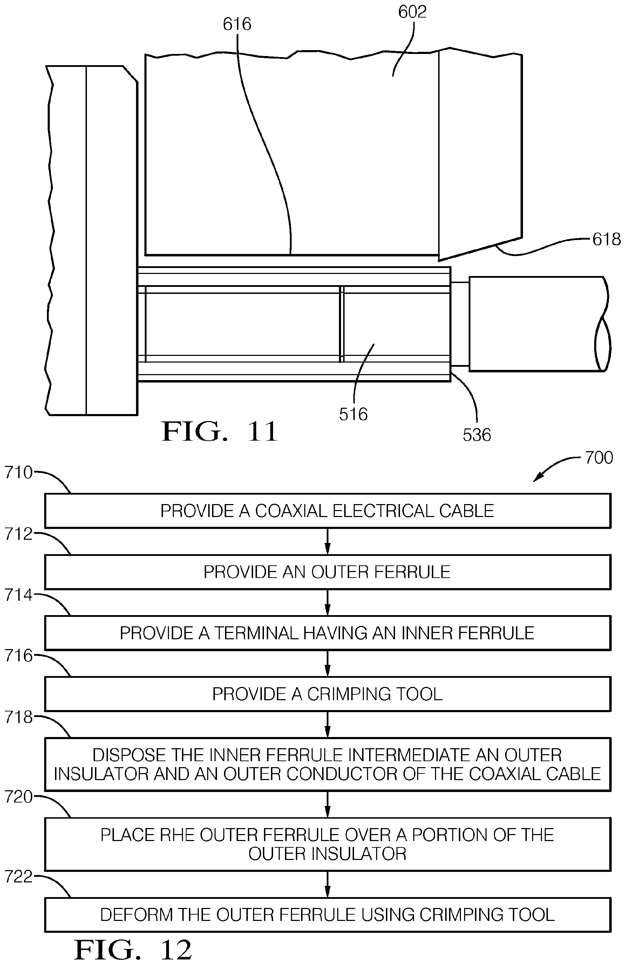

As shown in Fig. 11, the indentation surface 618 is placed near the distal edge 536 of the outer ferrule 516 as the crimping die 602 is applied to the outer ferrule 516.

Fig. 12 describes a method 700 of manufacturing the coaxial cable assembly 100, 500 described above. The method 700 includes the following steps:
STEP 710, PROVIDE A COAXIAL ELECTRICAL CABLE, includes providing a coaxial electrical cable 102 comprising a central inner conductor 104, an inner insulator 106 surrounding the inner conductor 104, an outer conductor 108 surrounding the inner insulator 106, and an outer insulator 110 surrounding the inner insulator 106;
STEP 712, PROVIDE AN OUTER FERRULE, includes providing a generally cylindrical seamless outer ferrule 116 having a ferrule radius 124;
STEP 714, PROVIDE A TERMINAL HAVING AN INNER FERRULE, is an optional step that includes providing a terminal having an inner ferrule 114;
STEP 716, PROVIDE A CRIMPING TOOL, includes providing a crimping tool 300 including four crimping dies 302 each having a die face 304 defining a consistent depression radius 312 that is less than the ferrule radius 124;
STEP 718, DISPOSE THE INNER FERRULE INTERMEDIATE AN OUTER INSULATOR AND AN OUTER CONDUCTOR OF THE COAXIAL CABLE, is an optional step that includes disposing the inner ferrule 114 intermediate the outer insulator 110 and the outer conductor 108 prior to STEP 722, DEFORM THE OUTER FERRULE USING THE CRIMPING TOOL;
STEP 720, PLACE THE OUTER FERRULE OVER A PORTION OF THE OUTER INSULATOR, includes placing the outer ferrule 116 over a portion of the outer insulator 110; and
STEP 722, DEFORM THE OUTER FERRULE USING THE CRIMPING TOOL, includes deforming the outer ferrule 116 using the crimping tool 300, 400, 600 to form four depressions 118 and four protrusions 120 in the outer ferrule 116 that are evenly spaced about a circumference of the outer ferrule 116. The outer ferrule 116 is held between the four crimping dies 302 so that the longitudinal axis of the outer ferrule 116 is substantially coincident with the longitudinal axis of the crimping tool 300. The four crimping dies 302 are brought simultaneously toward the longitudinal axes to provide substantially consistent pressure and deformation rates when forming the four depressions 118 and the four protrusions 120. The four depressions 118 each are characterized as having the depression radius 122. STEP 722 may further include deforming the four depressions 518 to form four indentations 532. Each indentation 532 has an indentation surface that is angled relative to an outer surface of each of the four depressions 518. Each indentation 532 forms a barb that at least partially penetrates the outer insulator 110.

The four crimping dies 302 are spaced approximately 90 degrees apart about the longitudinal axis of the crimping tool 300. After deformation of the outer ferrule 116, adjacent depressions 118 of the four depressions 118 are spaced approximately 90 degrees apart about the longitudinal axis of the outer ferrule 116. One of the four protrusions 120 is located intermediate the adjacent depressions 118. Adjacent protrusions 120 of the four protrusions 120 are spaced approximately 90 degrees apart about the longitudinal axis of the outer ferrule 116.

Accordingly, a coaxial electrical cable assembly 100 is provided. The consistent radius of the depressions 118 and the limited height 128 of the protrusions 120 reduces the variation in capacitance between the inner and outer conductors 104, 110 of the coaxial cable 102 in the area of the outer ferrule 116, thereby reducing the variation of impedance along the coaxial cable assembly 100 which provides improved insertion loss performance. The outer ferrule 516, as formed with the four depressions 518, four protrusions 520 and four indentations 532, also provides improved retention of the outer ferrule 516 to the coaxial cable assembly 100. The outer ferrule 516, as formed with the four depressions 118 and four protrusions 120, is also more easily accommodated into existing connector body designs having generally cylindrical connector cavities in which the coaxial cable assembly 100 is received.

Accordingly, a crimping tool 300 configured to form the four depressions 118 and four protrusions 120 in the outer ferrule 116 is also provided. The tool 300 includes four crimping dies 302 to form the four depressions 118 in the outer ferrule 116. The tool 300 also inclines four limiting dies 306 that limit growth of the four protrusions 120 so that the four protrusions 120 do not exceed a maximum height threshold 130. The crimping tool 300, when used with the outer ferrule 116, provides all of the benefits listed above.

The example presented herein is directed to a coaxial electrical cable assembly 100, however other embodiments may be envisioned that are adapted for use with other types of shielded or unshielded electrical cables. Yet other embodiments of the assembly may be envisioned wherein the conductors are fiber optic cables, pneumatic tubes, or hydraulic tubes.

The scope of the invention is defined by the appended claims.

As used herein, 'One or more' includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. Moreover, the use of the terms first, second, etc. does not denote any order of importance, but rather the terms first, second, etc. are used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, directional terms such as upper, lower, etc. do not denote any particular orientation, but rather the terms upper, lower, etc. are used to distinguish one element from another and establish a relationship between the various elements.

## Claims

1. A cable assembly (500), comprising:
an elongate conductor surrounded by an outer insulator (110); and
an outer ferrule (516) surrounding a portion of the conductor (100), wherein an outer surface of the outer ferrule (516) is deformed to produce an indentation (532) having an indentation surface that is angled relative to the outer surface and wherein the indentation (532) forms a barb that at least partially penetrates the outer insulator (110),
wherein the elongate conductor has a substantially circular cross section,
wherein the outer ferrule (516) is seamless and has a generally cylindrical shape having a ferrule radius (124), **characterised in that** the outer ferrule (516) is deformed to define four depressions (518) each having a convex bottom surface (534) and four protrusions (520) evenly spaced about a circumference of the outer ferrule (516), wherein the convex bottom surfaces (534) have a convex radius that is less than the ferrule radius (124), and wherein the convex bottom surfaces (534) are said outer surface and are deformed to produce four indentations (532).

2. The cable assembly (500) according to claim 1, wherein the indentation (532) is located adjacent a distal edge (536) of the outer ferrule (516).

3. The cable assembly (500) according to claim 1 or 2, wherein an angle of the indentation surface (618) relative to the outer surface is in a range of 10 to 20 degrees.

4. The cable assembly (500) according to any one of the preceding claims, wherein adjacent depressions (518) of the four depressions (518) are spaced approximately 90 degrees apart about a longitudinal axis (X) of the outer ferrule (516), wherein one of the four protrusions (520) is located intermediate the adjacent depressions (518), wherein adjacent protrusions (520) of the four protrusions (520) are spaced approximately 90 degrees apart about the longitudinal axis (X) of the outer ferrule (516), and wherein adjacent indentations (532) of the four indentations (532) are spaced approximately 90 degrees apart about the longitudinal axis (X) of the outer ferrule (516).

5. A method (700) of manufacturing a coaxial cable assembly (100) comprising the steps of:
providing a coaxial electrical cable (102) comprising a central inner conductor (104), an inner insulator (106) surrounding the inner conductor (104), an outer conductor (108) surrounding the inner insulator (106), and an outer insulator (110) surrounding the outer conductor (108);
providing a generally cylindrical seamless outer ferrule (516) having a ferrule radius (124);
providing a crimping tool (600) including four crimping dies (602) each having a first die face (604) defining a consistent depression radius (122) that is less than the ferrule radius (124) and a second die face (618) that is angled relative to the first die face (604);
placing the outer ferrule (116) over a portion of the outer insulator (110);
deforming the outer ferrule (516) using the crimping tool (600) to form four depressions (518) and four protrusions (520) in the outer ferrule (516) that are evenly spaced about a circumference of the outer ferrule (516), wherein the four depressions (518) each are characterized as having the depression radius (122); and
deforming the four depressions (518) to form four indentations (532), each indentation (532) having an indentation surface that is angled relative to an outer surface of each of the four depressions (518) and wherein each indentation (532) forms a barb that at least partially penetrates the outer insulator (110).

6. The method (700) according to claim 5, wherein the four indentations (532) are located adjacent a distal edge (536) of the outer ferrule (516).

7. The method (700) according to claim 5 or 6, wherein an angle of the indentation surface relative to the outer surface is in a range of 10 to 20 degrees.

8. The method (700) according to any one of the claims 5 to 7, wherein adjacent depressions (518) of the four depressions (518) are spaced approximately 90 degrees apart about a longitudinal axis (X) of the outer ferrule (516), wherein one of the four protrusions (520) is located intermediate the adjacent depressions (518), wherein adjacent protrusions (520) of the four protrusions (520) are spaced approximately 90 degrees apart about the longitudinal axis (X) of the outer ferrule (516), and wherein adjacent indentations (532) of the four indentations (532) are spaced approximately 90 degrees apart about the longitudinal axis (X) of the outer ferrule (516).

9. The method (700) according to any one of the claims 5 to 8, wherein a portion of the outer ferrule (516) retains the ferrule radius (124) after deformation and wherein each of the four protrusions (520) has a height (128) that is less than a height threshold (130).

10. A tool (600) for manufacturing a coaxial cable assembly configured to form four evenly spaced depressions (118) having an depression radius (122) and four evenly spaced protrusions (520) about a circumference of a generally cylindrical seamless ferrule (516) having a ferrule radius (124), each protrusion of the four protrusions (520) having a protrusion height (128) equal to or less than a height threshold (130), said tool (600) further configured to form four indentations (532), each indentation (532) having an indentation surface that is angled relative to an outer surface of each of the four depressions (518), said tool (600) comprising:
four crimping dies (602), each crimping die (602) of the four crimping dies (602) defining a concave crimping surface (616) having the depression radius (122) and a concave indentation surface (618) angled relative to the crimping surface (616), said indentation surface also having the depression radius (122); and
four limiting dies (306), each limiting die (306) located intermediate two adjacent crimping dies (602) of the four crimping dies (602) and defining a limiting surface (308) configured to limit a height (128) of each protrusion to the height threshold (130).

11. The tool (600) according to claim 10, wherein adjacent crimping dies (602) are spaced approximately 90 degrees apart about a longitudinal axis (X) and wherein adjacent limiting dies (306) of the four limiting dies (306) are spaced approximately 90 degrees apart about the longitudinal axis (X).

12. The tool (600) according to claim 10 or 11, wherein each limiting surface (308) is spaced a limiting distance from the longitudinal axis (X) of the outer ferrule (516) and wherein the limiting distance is equal to the ferrule radius (124) plus the height threshold (130).

13. The tool (600) according to any one of the claims 10 to 12, wherein the four limiting dies (306) are fixed such that each limiting surface (308) remains at the limiting distance as the four crimping dies (602) move relative to the longitudinal axis (X) of the outer ferrule (516).

14. The tool (600) according to any one of the claims 10 to 13, wherein the tool (300) further comprises four linkages (410) between each crimping die (602) and an adjoining limiting die (406), said four linkages (410) configured to move each limiting surface (308) of each limiting die (306) to the limiting distance as the four crimping dies (602) move toward the longitudinal axis (X) of the outer ferrule (516).

## Patentansprüche

1. Eine Kabelanordnung (500), welche umfasst:
einen langgestreckten Leiter, der von einem äußeren Isolator (110) umgeben ist; und
eine Außenhülse (516), welche einen Abschnitt des Leiters (100) umgibt, wobei eine äußere Oberfläche der Außenhülse (516) verformt wird, um eine Einkerbung (532) zu erzeugen, welche eine Einkerbungsoberfläche aufweist, die relativ zur äußeren Oberfläche geneigt ist, und wobei die Einkerbung (532) einen Widerhaken bildet, der mindestens teilweise in den äußeren Isolator (110) eindringt,
wobei der langgestreckte Leiter einen im Wesentlichen kreisförmigen Querschnitt aufweist,
wobei die Außenhülse (516) nahtlos ist und eine im Wesentlichen zylindrische Form aufweist, welche einen Hülsenradius (124) aufweist,
**dadurch gekennzeichnet, dass**
die Außenhülse (516) verformt wird, um vier Vertiefungen (518), welche jeweils eine konvexe untere Oberfläche (534) aufweisen, und vier Vorsprünge (520), welche gleichmäßig um einen Umfang der Außenhülse (516) verteilt sind, zu definieren, wobei die konvexen unteren Oberflächen (534) einen konvexen Radius aufweisen, der kleiner ausgebildet ist als der Hülsenradius (124), und wobei die konvexen unteren Oberflächen (534) die äußere Oberfläche bilden und verformt werden, um vier Einkerbungen (532) zu erzeugen.

2. Die Kabelanordnung (500) gemäß Anspruch 1, wobei die Einkerbung (532) benachbart zu einem distalen Rand (536) der Außenhülse (516) angeordnet ist.

3. Die Kabelanordnung (500) gemäß einem der Ansprüche 1 oder 2, wobei ein Winkel der Einkerbungsoberfläche (618) relativ zur äußeren Oberfläche zwischen 10 und 20 Grad beträgt.

4. Die Kabelanordnung (500) gemäß einem der vorherigen Ansprüche, wobei benachbarte Vertiefungen (518) der vier Vertiefungen (518) um ungefähr 90 Grad um eine Längsachse (X) der Außenhülse (516) verschoben angeordnet sind, wobei einer der Vorsprünge (520) zwischen den benachbarten Vertiefungen (518) angeordnet ist, wobei benachbarte Vorsprünge (520) der vier Vorsprünge (520) um ungefähr 90 Grad um die Längsachse (X) der Außenhülse (516) verschoben angeordnet sind, und wobei benachbarte Einkerbungen (532) der vier Einkerbungen (532) um ungefähr 90 Grad um die Längsachse (X) der Außenhülse (516) verschoben angeordnet sind.

5. Ein Verfahren (700) zur Herstellung einer Koaxialkabelanordnung (100), welches folgende Schritte umfasst:
Bereitstellen eines elektrischen Koaxialkabels (102), das einen zentralen Innenleiter (104), einen inneren Isolator (106), welcher den Innenleiter (104) umgibt, einen Außenleiter (108), welcher den inneren Isolator (106) umgibt, und einen äußeren Isolator (110), welcher den Außenleiter (108) umgibt, umfasst;
Bereitstellen einer im Wesentlichen zylindrisch ausgebildeten, nahtlosen Außenhülse (516), welche einen Hülsenradius (124) aufweist;
Bereitstellen eines Crimpwerkzeugs (600), welches vier Crimpeinsätze (602) umfasst, wobei jeder Crimpeinsatz eine erste Einsatzseite (604), welche einen gleichmäßigen Vertiefungsradius (122) definiert, der kleiner ausgebildet ist als der Hülsenradius (124), und eine zweite Einsatzseite (618), welche relativ zur ersten Einsatzseite (604) geneigt ist, aufweist;
Anordnen der Außenhülse (116) über einen Abschnitt des äußeren Isolators (110);
Verformen der Außenhülse (516) unter Verwendung des Crimpwerkzeugs (600), um vier Vertiefungen (518) und vier Vorsprünge (520) in die Außenhülse (516) zu bilden, welche gleichmäßig um einen Umfang der Außenhülse (516) verteilt sind, zu bilden, wobei die vier Vertiefungen (518) **dadurch gekennzeichnet sind, dass** sie den Vertiefungsradius (122) aufweisen; und
Verformen der vier Vertiefungen (518), um vier Einkerbungen (532) zu bilden, wobei jede Einkerbung (532) eine Einkerbungsoberfläche aufweist, welche relativ zu einer äußeren Oberfläche jeder der vier Vertiefungen (518) geneigt ist, und wobei jede Einkerbung (532) einen Widerhaken bildet, der mindestens teilweise in den äußeren Isolator (110) eindringt.

6. Das Verfahren (700) gemäß Anspruch 5, wobei die vier Einkerbungen (532) benachbart zu einem distalen Rand (536) der Außenhülse (516) angeordnet sind.

7. Das Verfahren (700) gemäß einem der Ansprüche 5 oder 6, wobei ein Winkel der Einkerbungsoberfläche relativ zur äußeren Oberfläche zwischen 10 und 20 Grad beträgt.

8. Das Verfahren (700) gemäß einem der Ansprüche 5 bis 7, wobei benachbarte Vertiefungen (518) der vier Vertiefungen (518) um ungefähr 90 Grad um eine Längsachse (X) der Außenhülse (516) verschoben angeordnet sind, wobei einer der Vorsprünge (520) zwischen den benachbarten Vertiefungen (518) angeordnet ist, wobei benachbarte Vorsprünge (520) der vier Vorsprünge (520) um ungefähr 90 Grad um die Längsachse (X) der Außenhülse (516) verschoben angeordnet sind, und wobei benachbarte Einkerbungen (532) der vier Einkerbungen (532) um ungefähr 90 Grad um die Längsachse (X) der Außenhülse (516) verschoben angeordnet sind.

9. Das Verfahren (700) gemäß einem der Ansprüche 5 bis 8, wobei ein Abschnitt der Außenhülse (516) den Hülsenradius (124) nach der Verformung behält und wobei jeder der vier Vorsprünge (520) eine Höhe (128) aufweist, welche geringer ist als ein Höhenschwellenwert (130).

10. Ein Werkzeug (600) zur Herstellung einer Koaxialkabelanordnung, welches dazu ausgebildet ist, vier gleichmäßig verteilte Vertiefungen (118), welche einen Vertiefungsradius (122) aufweisen, und vier gleichmäßig verteilte Vorsprünge (520) um einen Umfang einer im Wesentlichen zylindrisch ausgebildeten, nahtlosen Hülse (516), welche einen Hülsenradius (124) aufweist, zu bilden, wobei jeder Vorsprünge der vier Vorsprünge (520) eine Vorsprungshöhe (128) aufweist, welche gleich oder geringer ist als ein Höhenschwellenwert (130), wobei das Werkzeug (600) weiter dazu ausgebildet ist, vier Einkerbungen (532) zu bilden, wobei jede Einkerbung (532) eine Einkerbungsoberfläche aufweist, welche relativ zu einer äußeren Oberfläche jeder der vier Vertiefungen (518) geneigt angeordnet ist, wobei das Werkzeug (600) umfasst:
vier Crimpeinsätze (602), wobei jeder Crimpeinsatz der vier Crimpeinsätze (602) eine konkave Crimpoberfläche (616), welche den Vertiefungsradius (122) aufweist, und eine konkave Einkerbungsoberfläche (618), welche relativ zur Crimpoberfläche (616) geneigt angeordnet ist, definiert, wobei die Einkerbungsoberfläche auch den Vertiefungsradius (122) aufwesit; und
vier Begrenzungseinsätze (306), wobei jeder Begrenzungseinsatz (306) zwischen zwei benachbarten Crimpensätzen (602) der vier Crimpeinsätze (602) angeordnet ist und eine Begrenzungsoberfläche (308) definiert, welche dazu ausgebildet ist, eine Höhe (128) jedes Vorsprungs auf den Höhenschwellenwert (130) zu begrenzen.

11. Das Werkzeug (600) gemäß Anspruch 10, wobei benachbarte Crimpeinsätze (602) um ungefähr 90 Grad um eine Längsachse (X) verschoben angeordnet sind, und wobei benachbarte Begrenzungseinsätze (306) der vier Begrenzungseinsätze (306) um ungefähr 90 Grad um die Längsachse (X) verschoben angeordnet sind.

12. Das Werkzeug (600) gemäß einem der Ansprüche 10 oder 11, wobei jede Begrenzungsoberfläche (308) durch einen Begrenzungsabstand von der Längsachse (X) der Außenhülse (516) getrennt ist, und wobei der Begrenzungsabstand gleich dem Hülsenradius (124) zuzüglich des Höhenschwellenwerts (130) ist.

13. Das Werkzeug (600) gemäß einem der Ansprüche 10 bis 12, wobei die vier Begrenzungseinsätze (306) derart befestigt sind, dass jede Begrenzungsoberfläche (308) bei dem Begrenzungsabstand bleibt, wenn sich die vier Crimpeinsätze (602) relativ zur Längsachse (X) der Außenhülse (516) bewegen.

14. Das Werkzeug (600) gemäß einem der Ansprüche 10 bis 13, wobei das Werkzeug (300) weiter vier Verbindungselemente (410) zwischen jedem Crimpeinsatz (602) und einem benachbarten Begrenzungseinsatz (406) aufweist, wobei die vier Verbindungselemente (410) dazu ausgebildet sind, jede Begrenzungsoberfläche (308) jedes Begrenzungseinsatzes (306) an den Begrenzungsabstand zu verschieben, wenn sich die vier Crimpeinsätze (602) in Richtung der Längsachse (X) der Außenhülse (516) bewegen.

## Revendications

1. Un ensemble câble (500), comprenant:
un conducteur allongé entouré par un isolant extérieur (110) ; et
une virole extérieure (516) entourant une partie du conducteur (100), selon lequel une surface extérieure de la virole extérieure (516) est déformée de manière à produire une indentation (532) ayant une surface d'indentation qui est inclinée par rapport à la surface extérieure et selon lequel l'indentation (532) forme un barbillon qui pénètre au moins partiellement dans l'isolant extérieur (110),
selon lequel le conducteur allongé a une section transversale essentiellement circulaire,
selon lequel la virole extérieure (516) est sans soudure et a une forme essentiellement cylindrique ayant un rayon de virole (124),
**caractérisé en ce que**
la virole extérieure (516) est déformée de manière à définir quatre dépressions (518) ayant chacune une surface inférieure convexe (534) et quatre saillies (520) régulièrement espacées autour d'une circonférence de la virole extérieure (516), selon lequel les surfaces inférieures convexes (534) ont un rayon convexe qui est inférieur au rayon de virole (124), et selon lequel les surfaces inférieures convexes (534) forment ladite surface extérieure et sont déformées de manière à produire quatre indentations (532).

2. L'ensemble câble (500) selon la revendication 1, selon lequel l'indentation (532) est adjacente à un bord distal (536) de la virole extérieure (516).

3. L'ensemble câble (500) selon l'une des revendications 1 ou 2, selon lequel un angle de la surface d'indentation (618) par rapport à la surface extérieure est compris entre 10 et 20 degrés.

4. L'ensemble câble (500) selon l'une des revendications précédentes, selon lequel des dépressions adjacentes (518) des quatre dépressions (518) sont espacées d'environ 90 degrés autour d'un axe longitudinal (X) de la virole extérieure (516), selon lequel l'une des quatre saillies (520) est disposée entre les dépressions adjacentes (518), selon lequel des saillies adjacentes (520) des quatre saillies (520) sont espacées d'environ 90 degrés autour de l'axe longitudinal (X) de la virole extérieure (516), et selon lequel des indentations adjacentes (532) des quatre indentations (532) sont espacées d'environ 90 degrés autour de l'axe longitudinal (X) de la virole extérieure (516).

5. Un procédé (700) de fabrication d'un ensemble de câble coaxial (100), comprenant les étapes suivantes :
le fait de fournir un câble électrique coaxial (102) comprenant un conducteur interne central (104), un isolant intérieur (106) entourant le conducteur interne (104), un conducteur externe (108) entourant l'isolant intérieur (106), et un isolant extérieur (110) entourant le conducteur externe (108) ;
le fait de fournir une virole extérieure (516) sans soudure et essentiellement cylindrique ayant un rayon de virole (124) ;
le fait de fournir un outil de sertissage (600) comprenant quatre matrices de sertissage (602) ayant chacune une première face de matrice (604) définissant un rayon de dépression constant (122) qui est inférieur au rayon de virole (124) et une seconde face de matrice (618) qui est inclinée par rapport à la première face de matrice (604) ;
le placement de la virole extérieure (116) sur une partie de l'isolant extérieur (110) ;
la déformation de la virole extérieure (516) en utilisant l'outil de sertissage (600) de manière à former quatre dépressions (518) et quatre saillies (520) dans la virole extérieure (516) qui sont régulièrement espacées autour d'une circonférence de la virole extérieure (516), selon lequel les quatre dépressions (518) sont chacune caractérisées comme ayant le rayon de dépression (122) ; et
la déformation des quatre dépressions (518) de manière à former quatre indentations (532), chacune des indentations (532) ayant une surface d'indentation qui est inclinée par rapport à une surface extérieure de chacune des quatre dépressions (518) et selon lequel chacune des indentations (532) forme un barbillon qui pénètre au moins partiellement dans l'isolant extérieur (520).

6. Le procédé (700) selon la revendication 5, selon lequel les quatre indentations (532) sont adjacentes à un bord distal (536) de la virole extérieure (516).

7. Le procédé (700) selon l'une des revendications 5 ou 6, selon lequel un angle de la surface d'indentation par rapport à la surface extérieure est compris entre 10 et 20 degrés.

8. Le procédé (700) selon l'une des revendications 5 à 7, selon lequel des dépressions adjacentes (518) des quatre dépressions (518) sont espacées d'environ 90 degrés autour d'un axe longitudinal (X) de la virole extérieure (516), selon lequel l'une des quatre saillies (520) est disposée entre les dépressions adjacentes (518), selon lequel des saillies adjacentes (520) des quatre saillies (520) sont espacées d'environ 90 degrés autour de l'axe longitudinal (X) de la virole extérieure (516), et selon lequel des indentations adjacentes (532) des quatre indentations (532) sont espacées d'environ 90 degrés autour de l'axe longitudinal (X) de la virole extérieure (516).

9. Le procédé selon l'une des revendications 5 à 8, selon lequel une partie de la virole extérieure (516) conserve le rayon de virole (124) après déformation et selon lequel chacun des quatre saillies (520) a une hauteur (128) qui est inférieure à une hauteur seuil (130).

10. Un outil (600) pour la fabrication d'une ensemble de câble coaxial conçu de manière à former quatre dépressions (118) régulièrement espacées ayant un rayon de dépression (122) et quatre saillies (520) régulièrement espacées autour d'une circonférence d'une virole (516) sans soudure et essentiellement cylindrique ayant un rayon de virole (124), chacune des saillies des quatre saillies (520) ayant une hauteur de saillie (128) égale ou inférieure à une hauteur seuil (130), ledit outil (600) étant en outre conçu de manière à former quatre indentations (532), chacune des indentations (532) ayant une surface d'indentation qui est inclinée par rapport à une surface extérieure de chacun des quatre dépressions (518), ledit outil (600) comprenant :
quatre matrices de sertissage (602), chacune des matrices de sertissage (602) des quatre matrices de sertissage (602) définissant une surface de sertissage concave (616) ayant le rayon de dépression (122) et une surface d'indentation concave (618) inclinée par rapport à la surface de sertissage (616), ladite surface d'indentation ayant également le rayon de dépression (122) ; et
quatre matrices de limitation (306), chacune des matrices de limitation (306) étant disposée entre deux matrices de sertissage adjacentes (602) des quatre matrices de sertissage (602) et définissant une surface de limitation (308) conçue de manière à limiter une hauteur (128) de chacune des saillies à la hauteur seuil (130).

11. L'outil (600) selon la revendication 10, selon lequel des matrices de sertissage adjacentes (602) sont espacées régulièrement d'environ 90 degrés autour d'un axe longitudinal (X) et selon lequel des matrices de limitation adjacentes (306) des quatre matrices de limitation (306) sont espacées régulièrement d'environ 90 degrés autour de l'axe longitudinal (X).

12. L'outil (600) selon l'une des revendications 10 ou 11, selon lequel chacune des surfaces de limitation (308) est espacée d'une distance de limitation de l'axe longitudinal (X) de la virole extérieure (516) et selon lequel la distance de limitation est égale au rayon de virole (124) plus la hauteur seuil (130).

13. L'outil (600) selon l'une des revendications 10 à 12, selon lequel les quatre matrices de limitation (306) sont fixées de manière à ce que chacun des surfaces de limitation (308) reste à la distance de limitation quand les quatre matrices de sertissage (602) se déplacent par rapport à l'axe longitudinal (X) de la virole extérieure (516).

14. L'outil (600) selon l'une des revendications 10 à 13, selon lequel l'outil (300) comprend en outre quatre éléments de liaison (410) entre chacune des matrices de sertissage (602) et une matrice de limitation adjacente (406), les quatre éléments de liaison (410) étant conçus de manière à déplacer chacune des surfaces de limitation (308) de chacune des matrices de limitation (306) jusqu'à la distance de limitation quand les quatre matrices de sertissage (602) se déplacent vers l'axe longitudinal (X) de la virole extérieure (516).
